# EUROPÄISCHE PATENTANMELDUNG

(11) **EP 1 691 174 A2**
(43) Veröffentlichungstag der Anmeldung: **16.08.2006**
(21) Anmeldenummer: 06002543.4
(22) Anmeldetag: 08.02.2006
(51) Int. Cl.: G01F 1/26

(54) **Strömungssensor**

(30) Priorität: 09.02.2005 DE 102005005996
(71) Anmelder: Buck, Robert, 88142 Wasserburg (DE)
(72) Erfinder: Buck, Robert, 88142 Wasserburg (DE); Schocker, Berthold, 88069 Tettnang (DE); Buhl, Peter, 88069 Tettnang (DE)
(74) Vertreter: Gesthuysen, von Rohr & Eggert

(57) **Zusammenfassung**

Dargestellt und beschrieben ist ein Strömungssensor (1), für strömende Medien (3), mit einem zylindrischen Gehäuse (4), einem in dem Gehäuse (4) zumindest teilweise angeordneten Sensorelement und einem in das strömende Medium (3) hineinragenden Hubkörper (5), wobei der Hubkörper (5) beweglich im Gehäuse (4) geführt ist, in Abhängigkeit von der Strömung (6) des zu überwachenden Mediums (3) gegen die Federkraft eines zwischen dem Gehäuse (4) und dem Hubkörper (5) angeordneten Federelements (7) bewegbar ist und wobei das Sensorelement ein von der Position des Hubkörpers (5) abhängiges Signal erzeugt.

Der Strömungssensor ist dadurch auch bei schlagartigen Strömungsänderungen zuverlässig und dauerhaft einsetzbar, daß in dem Hubkörper (5) mindestens eine Nut (8) oder eine Bohrung (9) vorgesehen ist, die das strömende Medium (3) mit einem im Inneren des Strömungssensors (1) zwischen dem Gehäuse (4) und dem Hubkörper (5) ausgebildeten Raum (10) verbindet, so daß in Abhängigkeit von der Bewegungsrichtung des Hubkörpers (5) durch die Nut (8) oder die Bohrung (9) Medium (3) in den Raum (10) hinein oder aus dem Raum heraus fließen kann.

## Beschreibung

Die Erfindung betrifft einen Strömungssensor für strömende Medien, mit einem Gehäuse, mit einem in dem Gehäuse zumindest teilweise angeordneten Sensorelement und mit einem in das strömende Medium hineinragenden Hubkörper, wobei der Hubkörper beweglich im Gehäuse geführt ist und in Abhängigkeit von der Strömung des zu überwachenden Mediums gegen die Federkraft eines zwischen dem Gehäuse und dem Hubkörper angeordneten Federelements bewegbar ist und wobei das Sensorelement ein von der Position des Hubkörpers abhängiges Signal erzeugt. Daneben betrifft die Erfindung noch eine Baueinheit aus einem derartigen Strömungssensor und einem Anschlußstück, wobei in dem Anschlußstück eine Öffnung zur Aufnahme des Strömungssensors und ein Kanal, mit einem Einlaß und einem Auslaß, ausgebildet ist, durch den das Medium fließt.

Eingangs ist gesagt worden, daß die Erfindung einen Strömungssensor betrifft. Ein derartiger Strömungssensor kann auch als Strömungswächter oder als Strömungsmeßgerät bezeichnet werden. Daneben wird für derartige Strömungssensoren teilweise auch der Begriff Durchflußsensor bzw. Durchflußwächter verwendet. Im Rahmen der Erfindung wird unter einem Strömungssensor sowohl ein Strömungswächter bzw. Durchflußwächter verstanden, mit dem lediglich das Vorhandensein oder Nicht-Vorhandensein einer bestimmten Strömung festgestellt wird, als auch ein Strömungsmeßgerät bzw. Durchflußmeßgerät, bei dem ein Strömungswert gemessen wird; bei dem also ein dem Strömungswert entsprechender Meßwert gewonnen werden kann.

Sensoren, die zur Überwachung eines Mediums bzw. der Eigenschaft eines Mediums, wie z. B. des Druckes einer Flüssigkeit oder eines Gases, dienen, insbesondere Strömungssensoren, weisen meist ein zylindrisches Gehäuse auf, wobei das Gehäuse zum einen, wie bei allen Sensoren, zum Schutz des Sensors und der dazu gehörenden Elektronik, zum anderen aber auch zum sicheren und dauerhaften Anschluß an ein das Medium führendes Rohr bzw. einen Behälter dient. Dazu kann das Gehäuse entweder direkt in ein entsprechend ausgebildetes Rohrstück - T-Stück oder Prozeßanschluß - eingeschraubt, oder zusammen mit einem speziellen Anschlußstück als komplette Baueinheit mit dem Leitungssystem einer Maschine oder eines Behälters, durch das das zu überwachende Medium fließt, verbunden werden.

Strömungssensoren können bei einer Vielzahl von Anwendungsfällen eingesetzt werden. Insbesondere können Strömungssensoren in verfahrenstechnischen Anlagen und bei Werkzeugmaschinen eingesetzt werden. In beiden Fällen dienen Strömungssensoren dazu, die Strömung bzw. die Strömungsgeschwindigkeit eines bestimmten Mediums, beispielsweise Luft, Wasser, Öl oder Kühlschmiermittel, zu messen bzw. zu überwachen. Je nach Anwendungsfall können dabei sehr hohe Strömungsgeschwindigkeiten, schlagartige Strömungsänderungen oder hohe Drücke auftreten, so daß die Strömungssensoren einerseits sehr robust sein müssen, andererseits aber auch eine hohe Empfindlichkeit und eine möglichst geringe Reaktionszeit aufweisen sollten.

Je nach Anwendungsfall gibt es dabei eine Reihe von unterschiedlichen Strömungssensoren, die unterschiedliche Meßprinzipien verwenden. Grundsätzlich kann dabei zwischen mechanischen und elektrischen bzw. elektronischen Strömungssensoren unterschieden werden. Bei den einfachsten mechanischen Strömungssensoren handelt es sich um Schwebekörperdurchflußmesser, die zwar eine kurze Reaktionszeit aber in der Regel auch nur eine geringe Genauigkeit aufweisen.

Bekannte elektronische Strömungswächter bzw. Strömungsmeßgeräte arbeiten häufig nach dem kalorimetrischen Prinzip. Dazu weisen die Strömungssensoren in der Regel mindestens ein Temperaturmeßelement und ein Heizelement auf. Im allgemeinen arbeitet man mit einer Differenztemperaturmessung. Ein erstes Temperaturmeßelement mißt die eigentliche Meßtemperatur, wobei sich die Meßtemperatur aus der Heizleistung des Heizelements, der Temperatur des strömenden Mediums und der strömungsabhängigen Wärmetransportkapazität des strömenden Mediums ergibt. Weiter mißt im allgemeinen ein zweites Temperaturmeßelement eine Referenztemperatur, wobei jedoch die Funktion des zweiten Temperaturmeßelements auch von dem Heizelement übernommen werden kann. Derartige Strömungssensoren sind zwar relativ genau, haben jedoch häufig eine relativ lange Reaktionszeit und sind außerdem relativ teuer.

Ein eingangs genanter Strömungssensor, mit einem in das strömende Medium hineinragenden Hubkörper, dessen von der Strömung des zu überwachenden Mediums abhängig Position von dem Sensorelement überwacht bzw. detektiert wird, ist aus der nachveröffentlichten DE 20 2004 013 488 U1 bekannt. Ähnliche Strömungssensoren, die zumeist einen Reed-Kontakt als Sensorelement aufweisen, sind auch aus der Praxis bekannt und werden teilweise auch als Kolben- oder Ventildurchflußmesser bezeichnet.

Der vorliegenden Erfindung liegt nun die Aufgabe zugrunde, ein eingangs beschriebenen Strömungssensor zur Verfügung zu stellen, der auch bei schlagartigen Strömungsänderungen zuverlässig und dauerhaft arbeitet, so daß er insbesondere bei Werkzeugmaschinen, die ein Leitungssystem aufweisen, vorteilhaft eingesetzt werden kann.

Die zuvor genannte Aufgabe ist bei dem eingangs beschriebenen Strömungssensor dadurch gelöst, daß in dem Hubkörper mindestens eine Nut oder eine Bohrung vorgesehen ist, die das strömende Medium mit einem, im Inneren des Strömungssensors, zwischen dem Gehäuse und dem Hubkörper ausgebildeten, Raum verbindet, so daß in Abhängigkeit von der Bewegungsrichtung des Hubkörpers Medium durch die Nut oder die Bohrung in den Raum hinein oder aus dem Raum heraus fließen kann. Durch die Ausbildung einer Nut oder einer Bohrung in dem Hubkörper wird somit eine selbsttätige hydraulische Dämpfung für die Bewegung des Hubkörpers realisiert, so daß es auch bei schlagartigen Strömungsänderungen nicht zu einer mechanischen Beschädigung des Strömungssensors, insbesondere des Hubkörpers, kommt.

Wird der Strömungssensor insgesamt, insbesondere jedoch der Hubkörper, senkrecht eingebaut, so wird der Hubkörper durch die Strömung gegen die Federkraft des Federelements nach oben gedrückt. Bei einer derartigen Bewegungsrichtung des Hubkörpers wird dann Medium aus dem zwischen dem Gehäuse und dem Hubkörper ausgebildeten Raum gedrückt, so daß das Medium durch die Nut bzw. die Bohrung aus dem Raum hinaus fließt, d.h. nach unten fließt. Wird dagegen bei einer schwächer werdenden Strömung oder bei Abfließen des Mediums der Hubkörper durch das Federelement wieder nach unten gedrückt, so strömt das Medium durch die Nut bzw. die Bohrung in den zwischen dem Gehäuse und dem Hubkörper ausgebildeten Raum, welcher somit die Funktion eines Aufnahme- oder Ausgleichsraumes hat. Die in dem Hubkörper ausgebildete Nut oder Bohrung hat somit die Funktion einer Verdrängungsnut bzw. -bohrung. Damit wird sowohl bei einem Anstieg als auch bei einem Abfall der Strömung des zu überwachenden Mediums die dadurch verursachte Bewegung des Hubkörpers gedämpft, ohne daß es dazu eines weiteren Bauelements oder einer von außen zuzuführenden Energie bedarf.

Das Maß der Dämpfung einerseits und die Länge der Reaktionszeit des Strömungssensors andererseits kann durch einfache Art und Weise durch die Ausbildung der Nut bzw. der Bohrung, insbesondere durch deren Anzahl und Form, bestimmt werden. Dabei gilt, daß eine Erhöhung der Dämpfung gleichzeitig auch eine Verlängerung der Reaktionszeit des Strömungssensors zur Folge hat. Neben einer oder mehreren geraden, d.h. in Längsrichtung des Hubkörpers verlaufenden, Nuten kann der Hubkörper auch mit einer spiralförmigen Nut, ähnlich einem Gewinde, versehen werden.

Durch die Anordnung des in das strömende Medium hineinragenden, beweglich am Gehäuse geführten Hubkörpers, dessen Position ein Maß für die zu überwachende Strömung darstellt, kann ein sehr einfacher Strömungssensor realisiert werden. Das Sensorelement kann dabei insbesondere durch einen in dem Gehäuse angeordneten berührungslosen Näherungsschalter realisiert sein, der in Abhängigkeit von der Position des Hubkörpers ein Schaltsignal ausgibt.

Wie eingangs bereits ausgeführt worden ist, kann mit dem erfindungsgemäßen Strömungssensor sowohl lediglich das Vorhandensein oder Nicht-Vorhandensein einer bestimmten Strömung festgestellt als auch ein Strömungswert gemessen werden; d. h. ein dem Strömungswert entsprechender Meßwert gewonnen werden. Somit handelt es sich bei dem berührungslosen Näherungsschalter nicht um einen binären Schalter im klassischen Sinn, sondern um einen berührungslosen "Näherungssensor", der zunächst ein von der Position des Hubkörpers abhängiges analoges Signal erzeugt, welches entsprechend der Ausgestaltung des Sensorelements in ein klassisches - binäres - Schaltsignal oder ein analoges bzw. digitales Ausgangssignal umgewandelt wird.

Je nachdem, ob der erfindungsgemäße Strömungssensor als Strömungsmeßgerät einen dem Strömungswert entsprechenden analogen Meßwert oder als Strömungswächter ein binäres Schaltsignal ausgeben soll, wird das von dem Näherungsschalter erzeugte Signal in einer nachfolgenden Bearbeitungseinheit in ein binäres, analoges oder digitales Ausgangssignal umgewandelt. Die Bearbeitungseinheit kann dabei im Falle eines Strömungsmeßgeräts insbesondere einen Mikroprozessor und im Falle eines Strömungswächters insbesondere einen Schwellwertschalter aufweisen. Der Schwellwert des Schwellwertschalters kann dabei vorzugsweise extern, beispielsweise durch eine über eine Leitung - insbesondere eine Busleitung - anliegende Spannung eingestellt werden. Dadurch kann der Schwellwert einfach an verschiedene Einsatzbedingungen angepaßt werden.

Soll der erfindungsgemäße Strömungssensor als Strömungswächter ein binäres Schaltsignal ausgeben, so wird vorzugsweise ein Näherungsschalter mit einer geringen Hysterese und/oder einer hohen Schaltgenauigkeit eingesetzt, so daß eine hohe Meßgenauigkeit des Strömungssensors erreicht werden kann. Die geringe Hysterese sorgt dabei dafiir, daß der Einschaltpunkt und der Ausschaltpunkt eines als Schalter ausgebildeten Strömungssensors sehr eng zusammen liegen, so daß nur ein geringer Unterschied in der Position des Hubkörpers und damit in der Strömung des zu überwachenden Mediums zwischen dem Einschaltpunkt und dem Ausschaltpunkt besteht.

Gemäß einer vorteilhaften Ausgestaltung des erfindungsgemäßen Strömungssensors weist der Hubkörper einen umlaufenden Bund auf, wobei der Bund so ausgebildet ist, daß der Strömungssensor zusätzlich die Funktion eines Rückschlagventils aufweist. Hierdurch kann ein vollständiges "Leerlaufen" eines Bereichs des Leitungssystems verhindert werden.

Um auch bei relativ kleinen Strömungen einen ausreichend großen Hub des Hubkörpers zu erreichen, der dann auch mit einem einfachen berührungslosen Näherungsschalter detektiert werden kann, ist vorzugsweise vorgesehen, daß zwischen dem - im eingebauten Zustand - in das strömende Medium ragenden, eine konische Spitze aufweisenden Ende des Hubkörpers und dem umlaufenden Bund ein zylindrischer Abschnitt ausgebildet ist. Durch die Ausbildung eines zylindrischen Abschnittes, der im eingebauten Zustand des Strömungssensors in das strömende Medium hineinragt, wird bereits bei sehr geringen Strömungen ein ausreichend großer Hub des Hubkörpers erreicht.

Alternativ dazu kann das ― im eingebauten Zustand ― in das strömende Medium hineinragende Ende des Hubkörpers auch eine kegelstumpfförmige bzw. konusförmige Spitze aufweisen. Durch eine derartige Ausbildung des Hubkörpers kann erreicht werden, daß der Hub des Hubkörpers in etwa proportional zur Strömungsgeschwindigkeit des zu überwachenden Mediums ist.

Alternativ zu einem zylindrischen Abschnitt kann auch ein Abschnitt mit einer geringen Konizität von 0,5° bis 15°, vorzugsweise von 1° bis 10° am Hubkörper ausgebildet sein. In diesem Fall kann dann der umlaufende Bund entfallen. Der Vorteil eines Abschnitts mit einer geringen Konizität besteht darin, daß Toleranzen im Durchmesser der Leitungsabschnitts, in den der Hubkörper hineinragt, beispielsweise des Ventilsitzes, durch den konischen Bereich ausgeglichen werden können. Dadurch ist gewährleistet, daß für einen Solldurchmesser des Leitungsabschnitts auch stets ein Strömungssensor mit einem entsprechenden Hubkörperdurchmesser eingesetzt werden kann.

Zuvor ist bereits ausgeführt worden, daß bei dem erfindungsgemäßen Strömungssensor ein einfacher berührungsloser Näherungsschalter als Sensorelement verwendet werden kann. Gemäß einer ersten vorteilhaften Ausgestaltung des erfindungsgemäßen Strömungssensors wird als Sensorelement ein Magnetschalter verwendet, wobei im Hubkörpers ein Permanentmagnet angeordnet ist. Wird der Hubkörper aufgrund einer vorliegenden Strömung des zu überwachenden Mediums in Richtung des Gehäuses bewegt, so führt dies zu einer Verringerung des Abstandes zwischen dem Magnetschalter und dem Permanentmagnet, was bei einem vorgegebenen Abstand ein Schaltsignal des Magnetschalters und damit des Strömungssensors auslöst. Anstelle eines binären Schaltsignals kann der Strömungssensor auch ein zum Abstand des Hubkörpers und damit zur Strömung proportionales Signal, insbesondere eine Analogsignal, ausgeben. Hierfür ist es wesentlich, daß der Magnetschalter selber zunächst ein analoges Signal und nicht bloß ein binäres Schaltsignal abgibt; der Magnetschalter kann somit auch als Magnetsensor oder magnetischer Näherungsschalter bezeichnet werden. Ein Reed-Kontakt als Magnetschalter ist somit hierfür nicht geeignet.

Der Vorteil bei der Verwendung eines Magnetschalters bzw. Magnetsensors als Sensorelement besteht darin, daß derartige Magnetschalter auch bei einem relativ kleinen Durchmesser einen ausreichend großen Schaltabstand aufweisen, so daß der Hubkörper einen entsprechend großen Hub zurücklegen kann. Als Magnetschalter eignet sich daher insbesondere eine GMR-Zelle (Giant Magneto Resistor). Eine derartige GMR-Zelle hat nicht nur den Vorteil eines relativ großen Schaltabstandes, so daß ein Strömungssensor mit einem ausreichend großen Hub realisierbar ist, sondern sie eignet sich auch besonders gut zur Realisierung eines analogen Strömungssensors. Dabei wird der Umstand ausgewertet, daß sich das Signal der GMR-Zelle in Abhängigkeit vom Abstand des Permanentmagneten und damit in Abhängigkeit vom Abstand des Hubkörpers ändert. Bei einer entsprechenden Dimensionierung des Hubkörpers, insbesondere mit einer entsprechenden konisch oder kegelstumpfförmig zulaufenden Spitze, ist dabei das analoges Ausgangssignal des magnetischer Näherungsschalters im wesentlichen linear proportional zur Strömung des zu überwachenden Mediums.

Gemäß einer alternativen Ausgestaltung des erfindungsgemäßen Strömungssensors wird als Sensorelement ein induktiver Näherungsschalter verwendet, insbesondere ein nichtbündig einbaubarer induktiver Näherungsschalter. Derartige induktive Näherungsschalter werden seit Jahrzehnten millionenfach im industriellen Bereich eingesetzt, so daß je nach konkretem Anwendungsfall eine Vielzahl unterschiedlicher induktiver Näherungsschalter, mit unterschiedlichen Durchmessern und unterschiedlichen Schaltabständen zur Verfügung stehen. Ein nichtbündig einbaubarer induktiver Näherungsschalter weist im Unterschied zu einem bündigen bzw. bündig einbaubaren Näherungsschalter auch ein seitliches Streufeld auf, da der vordere sensitive Bereich des Näherungsschalters kein Metallgehäuse aufweist, so daß nicht nur frontal sondern auch seitlich an den Näherungsschalter angenäherte Objekte erkannt werden können. Bei einem nichtbündig einbaubaren induktiven Näherungsschalter reicht ein Metallgehäuse - sofern der Näherungsschalter ein Metallgehäuse aufweist - nur bis zum Sensorkopf, d. h. bis zur Spule bzw. bis zum Schalenkern des Näherungsschalters.

Damit auch ein induktiver Näherungsschalter bei einem möglichst geringen Durchmesser eine großen Schaltabstand aufweist, ist vorzugsweise vorgesehen, daß der Sensorkopf des induktiven Näherungsschalter neben einer Spule einen Schalenkem, insbesondere aus Ferrit aufweist, in dem die Spule eingelegt ist. Derartige Schalenkerne sind bei induktiven Näherungsschalter seit langem bekannt und dienen dazu, die räumliche Verteilung der Feldlinien des elektromagnetische Feld des Sensorkopfes in gewünschter Weise zu beeinflussen. Alternativ dazu kann der Sensorkopf des induktiven Näherungsschalter eine Luftspule aufweisen, wobei in der Luftspule vorzugsweise ein stabförmiger Ferrit- oder Eisenkern angeordnet ist.

Die Verwendung eines induktiven Näherungsschalters als Sensorelement ist insbesondere dann vorteilhaft, wenn es sich bei dem Medium um ein Kühl- oder Schmiermittel handelt, in dem kleine Metallpartikelchen vorhanden sein können, da es dann bei Magnetschaltern zu Fehlfunktionen kommen kann.

Gemäß einer bevorzugten konstruktiven Ausgestaltung des erfindungsgemäßen Strömungssensors ist das zum Hubkörper weisende Ende des Gehäuses als Führungsbolzen und das Ende des Hubkörpers hülsenförmig ausgebildet, so daß der Hubkörper auf dem Führungsbolzen geführt ist. Der hülsenförmige Teil des Hubkörpers besteht dabei vorzugsweise aus Metall, insbesondere aus Edelstahl, so daß er als Betätigungselement für einen induktiver Näherungsschalter dient. Bei einer entsprechenden Annäherung des Endes des Hubkörpers an die Stirnseite des induktiven Näherungsschalters entsteht in der Stirnseite des hülsenförmigen Teils des Hubkörpers ein Kreisstrom, der eine stark bedämpfende Wirkung auf das elektromagnetische Feld des Näherungsschalters ausübt. Dieser Effekt ist als Kurzschlußringeffekt bekannt. Da ein nichtbündig einbaubarer induktiver Näherungsschalter auch ein seitliches Streufeld aufweist, bleibt der Näherungsschalter auch bei einer weiteren Annäherung des Hubkörpers weiter bedämpft, da der Näherungsschalter sich fortlaufend innerhalb des hülsenförmige Teil des Hubkörpers befindet.

Aufgrund der stark bedämpfenden Wirkung der Stirnseite des hülsenförmigen Teils des Hubkörpers kann der hülsenförmige Teil des Hubkörpers sehr dünn ausgebildet sein, so daß der Hubkörper insgesamt ein geringes Gewicht auf weist. Hierdurch ergibt sich nicht nur eine Platz- und Materialersparnis, sondern auch eine verbesserte Dynamik des Strömungssensors. Der hülsenförmige Teil des Hubkörpers kann beispielsweise eine Wandstärke von nur 1 mm oder weniger aufweisen. Das Verhältnis des Durchmessers des hülsenförmigen Teils des Hubkörpers zum Durchmesser der Spule des induktiven Näherungsschalters kann dabei einen Wert von 2 bis 4, vorzugsweise von 2,5 bis 3,5 haben.

Vorteilhafterweise ist das Sensorelement derart in dem Gehäuse angeordnet, daß der Abstand des Sensorelements zum Hubkörper einstellbar ist. Hierdurch ist ein einfaches Einstellen des Schaltpunktes des Näherungsschalters bei einem als Schalter ausgebildeten Strömungssensors bzw. des Nullpunktes bei einem analogen Strömungssensor möglich. Im einfachsten Fall ist dabei der ein Außengewinde aufweisende Näherungsschalter in dem Gehäuse eingeschraubt, so daß durch eine entsprechende Schraubbewegung der Abstand des Sensorelements zum Hubkörper vergrößert oder verkleinert werden kann. Bei einem analogen Strömungssensor kann dadurch auch der Meßbereich eingestellt werden. Dadurch kann beispielsweise ein Teilbereich des maximal möglichen Meßbereichs ausgewählt werden, der dann mit einer entsprechend höheren Meßgenauigkeit gemessen werden kann.

Gemäß einer komfortableren Alternative der Einstellbarkeit ist an dem dem Hubkörper abgewandten Ende des Gehäuses ein Befestigungsbügel aufgeschraubt und zwischen dem Ende des Gehäuses und dem Befestigungsbügel eine Verstellmutter angeordnet ist, wobei das Sensorelement ein Außengewinde mit mindestens einer abgeflachten Längsseite aufweist, in dem Befestigungsbügel eine an den Querschnitt des Sensorelements angepaßte Öffnung ausgebildet ist und die Verstellmutter ein zum Außengewinde des Sensorelements korrespondierendes Innengewinde aufweist. Durch Verdrehen der Verstellmutter kann dann die axiale Position des Sensorelements eingestellt werden kann, ohne daß sich das Sensorelement mitdreht. Dies ist insbesondere dann vorteilhaft, wenn das Sensorelement über sein Anschlußkabel bereits elektrisch angeschlossen ist, da dann ein Mitdrehen des Anschlußkabels verhindert wird.

Der Erfindung liegt darüber hinaus die Aufgabe zugrunde, eine Anschlußmöglichkeit für einem Strömungssensor zur Verfügung zu stellen, welche bei möglichst einfachem Aufbau sehr robust ist und somit auch bei einem hohen Druckbereich des zu überwachenden Mediums einen sicheren und problemlosen Anschluß des Strömungssensors ermöglicht.

Diese Aufgabe wird durch eine eingangs beschriebenen Baueinheit aus einem Strömungssensor und einem, einen Kanal aufweisenden Anschlußstück erreicht, bei der der Kanal einen Abschnitt aufweist, in den der Hubkörper hineinragt und durch den das Medium im wesentlichen parallel zur Längsachse des Hubkörpers fließt, so daß in Abhängigkeit von der Strömung des zu überwachenden Mediums der Hubkörper gegen die Federkraft des zwischen dem Gehäuse und dem Hubkörper angeordneten Federelements gedrückt wird.

Durch eine entsprechende Dimensionierung des Anschlußstücks, in dessen Öffnung der Strömungssensor vorzugsweise eingeschraubt ist, insbesondere durch eine entsprechende Wahl des Materials sowie der Abmessungen des Anschlußstücks, kann eine Baueinheit zur Verfügung gestellt werden, die einerseits sehr kompakt ist, andererseits jedoch auch bei relativ hohen Drücken von über 100 bar zuverlässig einsetzbar ist. Die Verwendung eines vorgefertigten Anschlußstücks mit definierten Abmessungen, insbesondere bezüglich des Querschnitts des Kanals, ermöglicht darüber hinaus auf einfache Art und Weise eine Einstellung des Schaltpunkts des Strömungssensors, wobei der Schaltpunkt entweder werksseitig vorgegeben oder auf den jeweiligen Anwendungsfall abstimmbar sein kann.

Gemäß einer ersten Ausführungsform weist die Baueinheit hierzu einen Strömungssensor auf, dessen Hubkörper einen umlaufenden Bund, eine konische zulaufende Spitze und einen zwischen der konischen Spitze und dem umlaufenden Bund ausgebildeten zylindrischen Abschnitt aufweist. Das Anschlußstück ist dabei so ausgebildet, daß der Durchmesser des Abschnitts des Kanals, in den der Hubkörper hineinragt, etwas größer als der Durchmesser des zylindrischen Abschnitts des Hubkörpers und etwas kleiner als der Durchmesser des umlaufenden Bundes des Hubkörpers ist, so daß zwischen dem zylindrischen Abschnitt des Hubkörpers und dem Abschnitt des Kanals ein ringförmiger Spalt mit einer vorgegebenen Größe vorhanden ist. Der Hub des Hubkörpers bei einer bestimmten Strömungsgeschwindigkeit hängt dabei von der Größe des ringförmigen Spaltes und von der Federkraft des Federelements ab. Somit kann durch entsprechende Wahl der Abmessung des Hubkörpers und des Federelements auf einfache Art und Weise eine Baueinheit realisiert werden, bei der der Strömungssensor reproduzierbar bei einer bestimmten Strömungsgeschwindigkeit schaltet.

Bei einer alternativen Ausgestaltung der erfindungsgemäßen Baueinheit weist der Strömungssensor einen Hubkörper mit einem umlaufenden Bund und einer kegelstumpfförmigen Spitze auf. Das Anschlußstück ist dann so ausgebildet, daß der Durchmesser des Abschnitts des Kanals, in den der Hubkörper hineinragt, etwas größer als der mittlere Durchmesser der kegelstumpfförmigen Spitze des Hubkörpers und etwas kleiner als der Durchmesser des umlaufenden Bundes des Hubkörpers ist, so daß zwischen der kegelstumpfförmigen Spitze des Hubkörpers und dem Abschnitt ein ringförmiger Spalt vorhanden ist, dessen Größe von der Position des Hubkörpers abhängig ist. Durch die kegelstumpfförmige Ausbildung des Endes des Hubkörpers ist der Hub des Hubkörpers in etwa proportional zur Strömungsgeschwindigkeit des zu überwachenden Mediums. Durch eine entsprechende Wahl des Abstands des Sensorelements von dem Hubkörper kann somit auf einfache Art und Weise die Strömungsgeschwindigkeit festgelegt werden, bei der das Sensorelement schalten soll.

Durch die berührungslose Erfassung der Position des Hubkörpers kommen nur wenige Bauteile mit dem strömenden Medium in Berührung, wobei diese Bauteile aus einem Material hergestellt werden können, das auf das jeweilige Medium abgestimmt ist. Insbesondere können das Gehäuse, der Hubkörper und das Federelement aus Edelstahl bestehen. Alternativ können das Gehäuse und der Hubkörper auch aus einem für aggressive Medien geeigneten Kunststoff, beispielsweise POM, hergestellt werden. Das Federelement kann dann mit einer Kunststoff- oder Keramikschicht überzogen sein.

Im einzelnen gibt es nun eine Vielzahl von Möglichkeiten, den erfindungsgemäßen Strömungssensor bzw. die erfindungsgemäße Baueinheit aus einem Strömungssensor und einem Anschlußstück auszugestalten und weiterzubilden. Dazu wird verwiesen auf die den Patentansprüchen 1 und 27 nachgeordneten Patentansprüche sowie auf die Beschreibung bevorzugter Ausführungsbeispiele in Verbindung mit der Zeichnung. In der Zeichnung zeigen
- Fig. 1: ein erstes Ausführungsbeispiel einer Baueinheit bestehend aus einem erfindungsgemäßen Strömungssensor und einem Anschlußstück, ohne Strömung des zu überwachenden Mediums,
- Fig. 2: die Baueinheit gemäß Fig. 1, bei Strömung des zu überwachenden Mediums,
- Fig. 3: ein zweites Ausführungsbeispiel einer Baueinheit bestehend aus einem erfindungsgemäßen Strömungssensor und einem Anschlußstück, ohne Strömung des zu überwachenden Mediums,
- Fig. 4: die Baueinheit gemäß Fig. 3, bei Strömung des zu überwachenden Mediums,
- Fig. 5: ein drittes Ausführungsbeispiel einer Baueinheit bestehend aus einem erfindungsgemäßen Strömungssensor und einem Anschlußstück, ohne Strömung des zu überwachenden Mediums,
- Fig. 6: ein Ausführungsbeispiel eines erfindungsgemäßen Strömungssensors, mit einem induktiven Näherungsschalter als Sensorelement,
- Fig. 7: ein Ausführungsbeispiel eines erfindungsgemäßen Strömungssensors, mit einem Magnetschalter als Sensorelement,
- Fig. 8: ein weiteres Ausführungsbeispiel eines erfindungsgemäßen Strömungssensors, mit einem Magnetschalter als Sensorelement,
- Fig. 9: ein weiteres Ausführungsbeispiel einer Baueinheit mit einem Strömungssensor gemäß Fig. 1 und einem Anschlußstück,
- Fig. 10: zwei Darstellungen einer besonderen Variante des Hubkörpers eines erfindungsgemäßen Strömungssensors,
- Fig. 11: ein Ausführungsbeispiel eines erfindungsgemäßen Strömungssensors, mit einer besonderen Variante eines Hubkörpers,
- Fig. 12: eine Einzeldarstellung des Hubkörpers gemäß Fig. 11,
- Fig. 13: ein Ausführungsbeispiel eines erfindungsgemäßen Strömungssensors, mit einer speziellen Einstellanordnung für das Sensorelement, und
- Fig. 14: zwei Einzeldarstellungen der Einstellanordnung gemäß Fig. 13.

Die Figuren zeigen verschiedene Ausführungsformen eines Strömungssensors 1 bzw. einer Baueinheit bestehend aus einem Strömungssensor 1 und einem Anschlußstück 2. Der Strömungssensor 1 dient zur Überwachung der Strömung bzw. des Durchflusses eines strömenden Mediums 3, beispielsweise einer Kühlflüssigkeit innerhalb des Kühlkreislaufs einer Maschine.

Der Strömungssensor 1 weist auf ein Gehäuse 4, ein zumindest teilweise in dem Gehäuse 4 angeordnetes Sensorelement und einen in das strömende Medium 3 hineinragenden Hubkörper 5. Der beweglich in dem Gehäuse 4 geführte Hubkörper 5 wird in Abhängigkeit von der Strömung 6 des zu überwachenden Mediums 3 in Richtung des Gehäuses 4, d.h. bei der dargestellten Anordnung nach oben, gedrückt. Hierbei wird der Hubkörper 5 gegen die Federkraft eines zwischen dem Gehäuse 4 und dem Hubkörper 5 angeordneten Federelements 7 ausgelenkt.

Die Position des Hubkörpers 5, die ein Maß für die Strömung 6 des zu überwachenden Mediums 3 darstellt, wird von dem in dem Gehäuse 4 angeordneten Sensorelement ausgewertet. Im einfachsten Fall wird dabei nur das Vorhandensein oder Nicht-Vorhandensein einer bestimmten Strömung 6 überwacht. Grundsätzlich ist es jedoch auch möglich, das Sensorelement so auszubilden, daß der aktuelle Strömungswert gemessen wird.

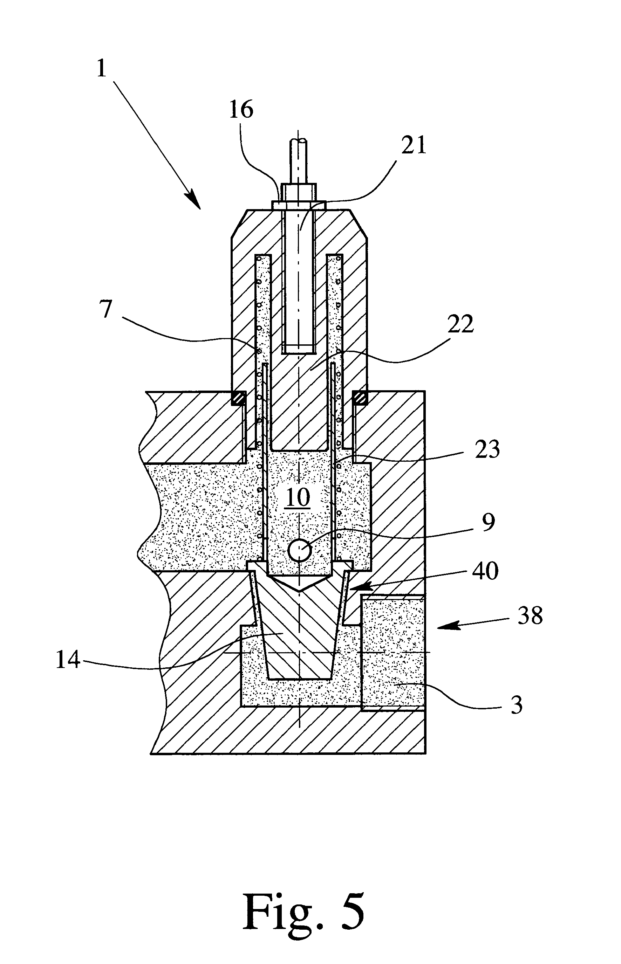

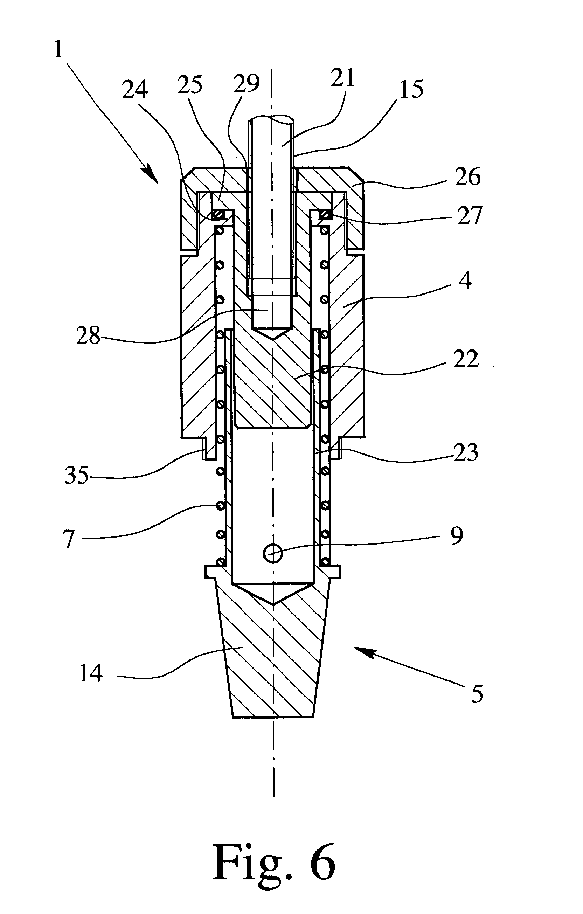

Da bei bestimmten Anwendungsfällen schlagartige Strömungsänderungen auftreten können, ist bei dem erfindungsgemäßen Strömungssensor 1 in dem Hubkörper 5 mindestens eine Nut 8 oder eine Bohrung 9 (Fig. 5 und 6) vorgesehen, durch die das strömende Medium 3 mit einem im Inneren des Strömungssensors 1, zwischen dem Gehäuse 4 und dem Hubkörper 5, ausgebildeten Raum 10 verbunden ist.

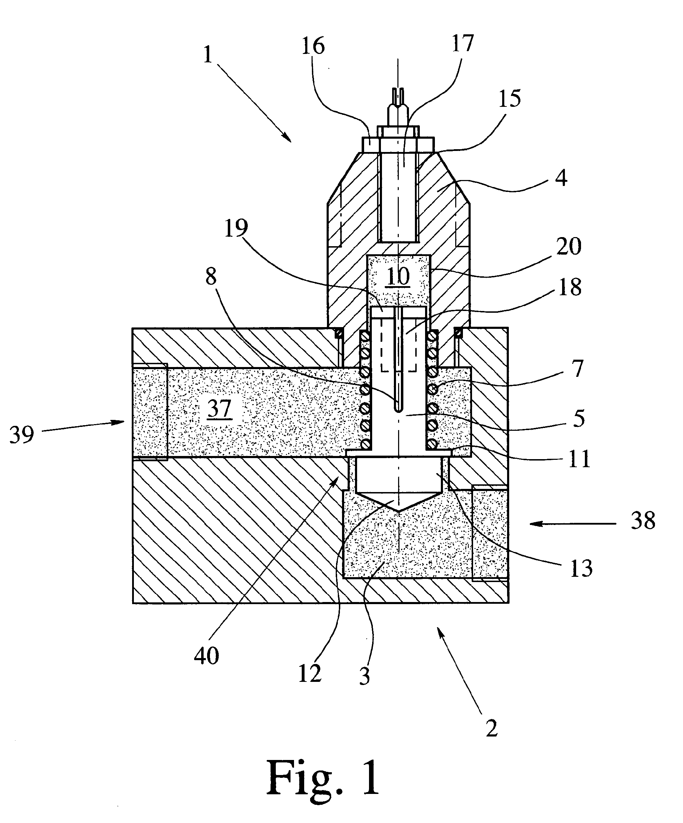

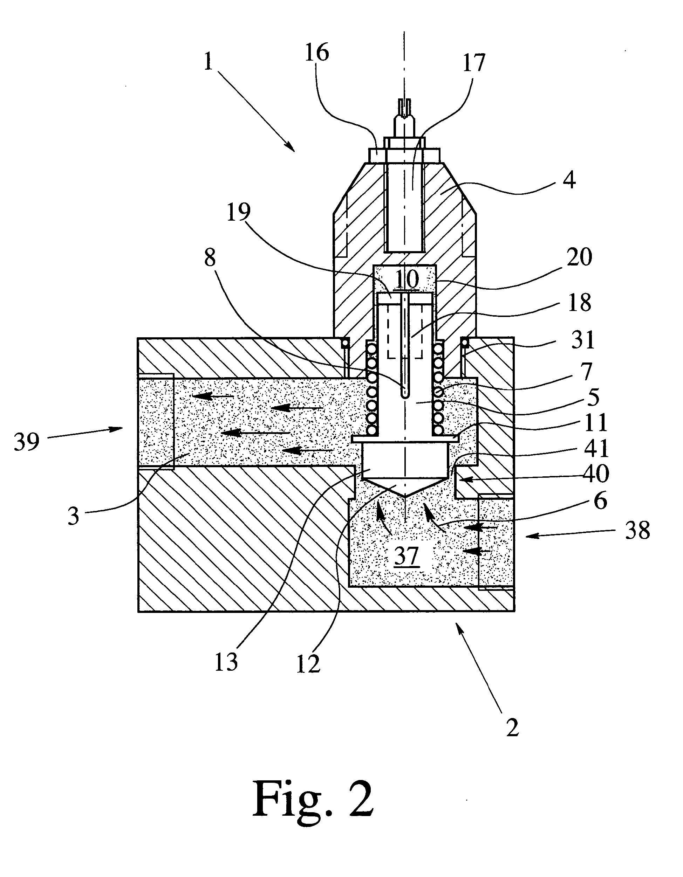

Bei dem in Fig. 1 dargestellten Ausführungsbeispiel, bei dem keine Strömung 6 vorhanden ist, ist der oberhalb des Hubkörpers 5 angeordnete Raum 10 dennoch mit dem Medium 3 gefüllt. Beginnt nun das Medium 3 in der in Fig. 2 dargestellten Richtung zu strömen, so wird der Hubkörper 5 entgegen der Federkraft des Federelements 7 ausgelenkt, d.h. nach oben gedrückt. Aufgrund der in dem Hubkörper 5 am Außenumfang ausgebildeten Nuten 8 wird dabei das in dem Raum 10 eingeschlossene Medium 3 durch die Nuten 8 nach unten hinausgedrückt. Wird der Hubkörper 5 bei nachlassender Strömung 6 aufgrund der Federkraft des Federelements 7 nach unten gedrückt, so gelangt umgekehrt Medium 3 durch die Nuten 8 in den Raum 10.

In Abhängigkeit von der Anzahl und der Tiefe der Nuten 8 oder der Anzahl und der Größe der Bohrungen 9 wird dabei die Hubbewegung des Hubkörpers 5 unterschiedlich stark gedämpft. Durch die Ausbildung der Nuten 8 bzw. der Bohrungen 9 in dem Hubkörper 5 ist somit eine selbsttätige hydraulische Dämpfung des Hubkörpers 5 realisiert, so daß es auch bei schlagartigen Strömungsänderungen nicht zu einer Beschädigung des Strömungssensors 1, insbesondere des Hubkörpers 5 kommt. Dabei kann die hydraulische Dämpfung durch die Anzahl und die Tiefe der Nuten 8 bzw. die Anzahl und die Größe der Bohrungen 9 nahezu beliebig an die jeweiligen Erfordernisse angepaßt werden.

Bei den in den Figuren dargestellten Ausführungsbeispielen ist am Hubkörper 5 ein umlaufender Bund 11 ausgebildet, so daß der Strömungssensor 1 bzw. der Hubkörper 5 im Zusammenspiel mit einem entsprechend ausgebildeten Ventilsitz zusätzlich die Funktion eines Rückschlagventils aufweist. Dadurch wird ein Leerlaufen des oberhalb des Bundes 11 angeordneten Bereichs verhindert.

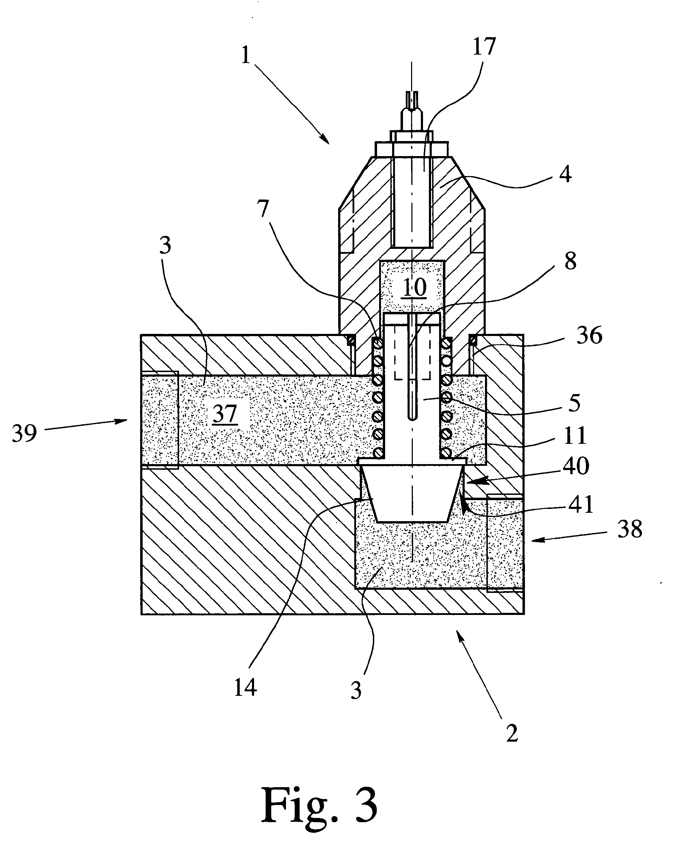

Der in den Fig. 1, 2 und 7 bis 9 dargestellte Strömungssensor 1 weist an dem vom Gehäuse 4 wegweisenden Ende des Hubkörpers 5 eine konische Spitze 12 auf. Durch die Wahl der Spitze 12 ist dabei eine Einstellung des Hubes und damit auch des Schaltpunkts des Sensorelements möglich. Darüber hinaus ist zwischen der konisch zulaufenden Spitze 12 des Hubkörpers 5 und dem umlaufenden Bund 11 ein zylindrischer Abschnitt 13 am Hubkörper 5 ausgebildet. Im Unterschied dazu weist der Hubkörper 5 bei dem in den Fig. 3 bis 6 dargestellten Strömungssensor 1 eine kegelstumpfförmige Spitze 14 auf.

Zur einfachen Befestigung des Sensorelements in dem Gehäuse 4 weist das Sensorelement ein Außengewinde 15 auf, so daß das Sensorelement in eine, ein korrespondierendes Innengewinde aufweisende Bohrung einschraubbar ist. Dies hat außerdem den Vorteil, daß dadurch der Abstand des Sensorelements zum Hubkörper 5 einfach einstellbar ist. Bei einem als berührungslosen Näherungsschalter ausgebildeten Sensorelements, der einen bestimmten Schaltabstand aufweist, kann somit durch unterschiedlich weites Hereindrehen des Sensorelements in das Gehäuse 4 der für das Auslösen eines Schaltsignals erforderliche Hub des Hubkörpers 5 variiert werden. Die Fixierung des Sensorelements in der so gewählten Position erfolgt dann einfach durch eine entsprechende Mutter 16.

Die Ausführungsformen des erfindungsgemäßen Strömungssensors 1 gemäß den Fig. 1 bis 4 und 7 bis 9 einerseits sowie gemäß den Fig. 5, 6 und 10, 11 andererseits unterscheiden sich durch die Verwendung unterschiedlicher Sensorelemente. Bei den Ausführungsbeispielen gemäß den Fig. 1 bis 4 und 7 bis 9 ist als Sensorelement ein Magnetschalter 17 vorgesehen. Zur Betätigung des Magnetschalters 17 ist in dem Hubkörper 5 ein Permanentmagnet 18 angeordnet. Der Permanentmagnet 18 ist dabei in einer im Hubkörper 5 ausgebildeten Bohrung eingesetzt, die mittels eines Deckels 19 dicht verschlossen, insbesondere verschweißt oder verlötet ist. Dies hat den Vorteil, daß der Permanentmagnet 18 nicht mit dem Medium 3 in Berührung kommt, so daß es auch bei aggressiven Medien nicht zu einer Beschädigung oder einer Verschmutzung des Permanentmagnets 18 kommen kann. Außerdem können dadurch die Bauteile und die Materialien, die mit dem Medium 3 in Berührung kommen reduziert werden. Insbesondere können dabei der Hubkörper 5 und der Deckel 19 aus demselben Material, beispielsweise aus Edelstahl oder aus Kunststoff, sein.

Bei der Ausbildung des Sensorelements als Magnetschalter 17 ist bei den in den Figuren 1 bis 4 und 9 gezeigten Ausführungsbeispielen im zum Hubkörper 5 weisenden Ende des Gehäuses 4 eine Bohrung 20 ausgebildet, in der das eine entsprechenden Außendurchmesser aufweisende zylindrische Ende des Hubkörpers 5 geführt ist. Bei diesen Ausführungsbeispielen ist der Permanentmagnet 18 in dem dem strömenden Medium 3 abgewandten bzw. dem Gehäuse 4 zugewandten Ende des Hubkörpers 5 angeordnet.

Bei den Ausführungsformen des Strömungssensors 1 gemäß den Fig. 5, 6 und 10, 11 ist als Sensorelement ein induktiver Näherungsschalter 21 vorgesehen, der ebenfalls in einer entsprechenden Bohrung im Gehäuse 4 befestigt ist. Dabei ist das zum Hubkörper 5 weisende Ende des Gehäuses 4 des Strömungssensors 1 als Führungsbolzen 22 ausgebildet, auf dem das dem Gehäuse 4 zugewandte hülsenförmige Ende 23 des Hubkörpers 5 geführt ist. Zur Gewährleistung der einwandfreien Funktion des induktiven Näherungsschalters 21 ist zumindest der Führungsbolzen 22 des Gehäuses 4 aus nicht metallischem Werkstoff ausgebildet, während der Hubkörper 5 aus metallischem Werkstoff besteht, so daß der Hubkörper 5 bei ausreichender Annäherung seines hülsenförmigen Endes 23 an den induktiven Näherungsschalter 21 einen Schaltvorgang auslöst. Der Schaltabstand, d. h. der Abstand des hülsenförmigen Endes 23 von dem induktiven Näherungsschalter 21, bei dem dieser einen Schaltvorgang auslöst, beträgt beispielsweise 3 - 5 mm. Dabei bleibt der induktiven Näherungsschalter 21 solange bedämpft, wie er in das hülsenförmige Ende 23 des Hubkörpers 5 eintaucht. Dadurch ist auch bei einem relativ kleinen Schaltabstand ein großer Hub des Hubkörpers 5 von 20 mm oder mehr möglich, so daß bei einer entsprechend großen Strömung 6 der Hubkörper 5 so weit ausgelenkt werden kann, daß die Strömung 6 des Mediums 3 nicht oder kaum beeinträchtigt wird.

Im Unterschied zu dem Hubkörper 5 gemäß den Fig. 1 bis 4, bei dem am Außenumfang vier in Längsrichtung des Hubkörpers 5 verlaufende Nuten 8 mit gleichem Abstand zueinander angeordnet sind, sind bei dem Hubkörper 5 gemäß den Fig. 5 und 6 vier Bohrungen 9 im hülsenförmigen Ende 23 des Hubkörpers 5 ausgebildet. Der mit Medium 3 gefüllte Raum 10 befindet sich bei dieser Ausführungsform somit im Inneren des hülsenförmigen Endes 23 des Hubkörpers 5.

Während bei dem Strömungssensor 1 gemäß Fig. 5 das gesamte Gehäuse 4 - inklusive des Führungsbolzens 22 - aus Kunststoff besteht, sind bei dem Strömungssensor 1 gemäß Fig. 6 das Gehäuse 4 und der Führungsbolzen 22 zwei separate Bauteile. Dabei weist das aus Metall, insbesondere aus Edelstahl, bestehende Gehäuse 4 eine umlaufende Schulter 24 und der aus Kunststoff bestehende Führungsbolzen 22 einen korrespondierenden Bund 25 auf. Die Befestigung des Führungsbolzens 22 in dem hülsenförmigen Gehäuse 4 erfolgt dabei mit Hilfe eines Deckels 26, der auf das Gehäuse 4 aufgeschraubt wird, wodurch der Bund 25 des Führungsbolzens 22 gegen die Schulter 24 des Gehäuses 4 gedrückt wird.

Zur Verhinderung einer mechanischen Beschädigung und zur sicheren Abdichtung ist zwischen der Schulter 24 des Gehäuses 4 und dem Bund 25 des Führungsbolzens 22 ein Dichtring 27 in einer entsprechend ausgebildeten Nut eingelegt. Der in einer Bohrung 28 im Führungsbolzen 22 angeordnete induktive Näherungsschalter 21 ist dadurch befestigt, daß im Deckel 26 eine Bohrung mit einem Innengewinde 29 ausgebildet ist, in die der induktive Näherungsschalter 21 eingeschraubt wird. Die in Fig. 6 dargestellte besondere Ausgestaltung des Strömungssensors 1, mit dem Gehäuse 4, dem separaten Führungsbolzen 22 und dem Deckel 26 ist auch bei sehr hohen Drücken bis zu mehreren 100 bar einsetzbar.

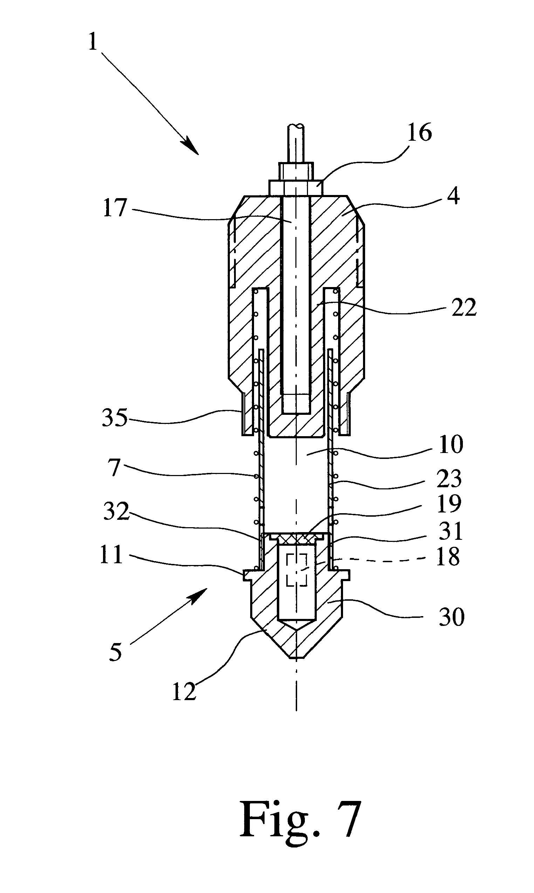

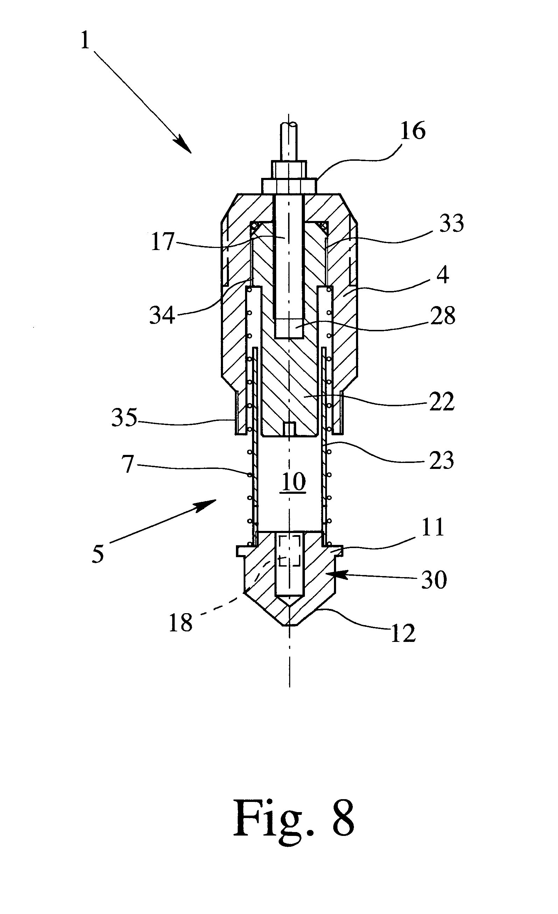

Bei den Ausführungsformen des Strömungssensors 1 gemäß den Fig. 7 und 8 ist als Sensorelement ein Magnetschalter 17 vorgesehen, wobei jedoch im Unterschied zu den Ausführungsbeispielen gemäß den Figuren 1 bis 4 und 9 das zum Hubkörper 5 weisende Ende des Gehäuses 4 als Führungsbolzen 22 ausgebildet ist. Wie bei den Ausführungsbeispielen des Strömungssensors 1 gemäß den Figuren 5 und 6 ist das dem Gehäuse 4 zugewandte Ende 23 des Hubkörpers 5 hülsenförmige ausgeführt. Dabei ist der Permanentmagnet 18 nicht in dem dem Gehäuse 4 zugewandten Ende 23 sondern in dem dem Medium 3 zugewandten Ende 30 des Hubkörpers 5 angeordnet. Dies hat den Vorteil, daß die Baulänge des Strömungssensors 1 deutlich reduziert ist, ohne den möglichen Hub zu verringern.

Da der Magnetschalter 17 einen großen Schaltabstand von 20 - 25 mm aufweist, wobei gleichzeitig eine hohe Schaltpunktgenauigkeit gegeben ist, können auch mit einem derartigen Strömungssensor 1 bereits sehr kleine Strömungen 6 detektiert werden. Durch den möglichen großen Hub ist außerdem sichergestellt, daß bei großen Strömung 6 der Hubkörper 5 so weit ausgelenkt werden kann, daß die Strömung 6 des Mediums 3 kaum beeinträchtigt wird. Schließlich ist bei dieser Ausführungsform auch eine große Länge des Federelements 7 realisierbar, so daß auch bei einem großen Hub des Hubkörpers 5 die Federkraft relativ konstant bleibt. Auch hierdurch wird die Empfindlichkeit und Genauigkeit des Strömungssensors 1 weiter verbessert.

Der in den Figuren 7 und 8 dargestellte Hubkörper 5 ist zweiteilig aufgebaut, besteht nämlich aus dem hülsenförmigen Ende 23 (Rohr) und dem massiven Ende 30. Das Ende 30 weist dabei ein Außengewinde 31 und das hülsenförmige Ende 23 ein korrespondierendes Innengewinde 32 auf, so daß die beiden Teile des Hubkörpers 5 einfach miteinander verschraubt werden können. Dadurch ist eine große Variationsmöglichkeit gegeben, da ein und dasselbe hülsenförmigen Ende 23 mit unterschiedlich ausgebildeten massiven Enden 30 - mit konisch zulaufender Spitze 12 oder mit kegelstumpfförmiger Spitze 14 - kombiniert werden kann.

Bei dem Strömungssensor 1 gemäß Fig. 8 sind das Gehäuse 4 und der Führungsbolzen 22 zwei separate Bauteile, wobei der Führungsbolzen 22 an seinem dem Hubkörper 5 abgewandten Ende ein Außengewinde 33 und das Gehäuse 4 ein korrespondierendes Innengwinde 34 aufweist, so daß der Führungsbolzen 22 in das Gehäuse 4 einschraubbar ist. Auch hierdurch läßt sich die Variationsmöglichkeit weiter erhöhen, da nun ein und dasselbe Gehäuse 4 mit unterschiedlichen Führungsbolzen 22 versehen werden kann. So kann der in Fig. 8 dargestellt Strömungssensor 1 auch mit einem induktiven Näherungsschalter 21 betrieben werden. In diesem Fall ist es lediglich erforderlich, daß der Führungsbolzen 22 aus Kunststoff und das hülsenförmige Ende 23 des Hubkörpers 5 aus Metall besteht.

Beide beschriebenen Ausführungsbeispiele des Sensorelements - Magnetschalter 17 oder induktiver Näherungsschalter 21 - haben den Vorteil, daß es sich um elektronische Schalter handelt, und daß ein relativ großer Schaltabstand bei hohe Schaltpunktgenauigkeit realisierbar ist. Der dadurch mögliche große Hubbereich des Hubkörpers 5 gewährleistet, daß auch bei sehr großen Strömungen 6 nur ein geringer Druckabfall durch den Einbau des Strömungssensors 1 verursacht wird. Außerdem ist eine sehr geringe Ansprechzeit von weniger als 150 ms auch bei der gewünschten Dämpfung des Hubkörpers 5 erreichbar. Die Verwendung des induktiven Näherungsschalters 21 anstelle eines Magnetschalters 17 hat den Vorteil, daß eventuell im Medium 3 mitgeführte metallische Späne den Schaltabstand des Sensorelements 1 nicht negativ beeinflussen.

Zur Befestigung des Strömungssensors 1 weist das Gehäuse 4 ein Außengewinde 35 auf, so daß das Gehäuse 4 in eine Wand eines Behälters oder in einen Anschlußstutzen eines Rohres, durch den das Medium 3 strömt, eingeschraubt werden kann. Bei den in den Figuren dargestellten Ausführungsbeispielen ist der Strömungssensor 1 jedoch in eine Öffnung 36 eines separaten Anschlußstücks 2 eingeschraubt. In dem quaderförmigen Anschlußstück 2 ist dabei ein Kanal 37 mit einem Einlaß 38 und einem Auslaß 39 für das strömende Medium 3 ausgebildet. Dabei weist der Kanal 37 einen Abschnitt 40 auf, in den der Hubkörper 5 des Strömungssensors 1 hineinragt und durch den das Medium 3 im wesentlichen parallel zur Längsachse des Hubkörpers 5 strömt, so daß in Abhängigkeit von der Strömung 6 des zu überwachenden Mediums 3 der Hubkörper 5 durch die Strömung 6 gegen die Federkraft des Federelements 7 nach oben gedrückt wird.

Der Abschnitt 40 des Kanals 37 ist von seinen Abmessungen auf den jeweiligen Hubkörper 5 abgestimmt. Bei dem Ausführungsbeispiel gemäß den Fig. 1 und 2, bei dem der Hubkörper 5 des Strömungssensors 1 einen umlaufenden Bund 11, eine konisch zulaufende Spitze 12 und einen zwischen der konischen Spitze 12 und dem umlaufenden Bund 11 ausgebildeten zylindrischen Abschnitt 13 aufweist, ist der Durchmesser des Abschnitts 40 des Kanals 37 etwas größer als der Durchmesser des zylindrischen Abschnitts 13 und etwas kleiner als der Durchmesser des umlaufenden Bunds 11 des Hubkörpers 5. Dadurch ist gewährleistet, daß zwischen dem zylindrischen Abschnitt 13 des Hubkörpers 5 und dem Abschnitt 40, der funktional einem Ventilsitz entspricht, bei einer Strömung 6 des Mediums 3 ein ringförmiger Spalt 41 vorhanden ist. Aufgrund des zylindrischen Abschnitts 13 des Hubkörpers 5 und der zylindrischen Bohrung des Abschnitts 40, ist bei dem Ausführungsbeispiel gemäß den Fig. 1 und 2 der Spalt 41 unabhängig von der Größe der Strömung 6 des Mediums 3 stets gleich groß.

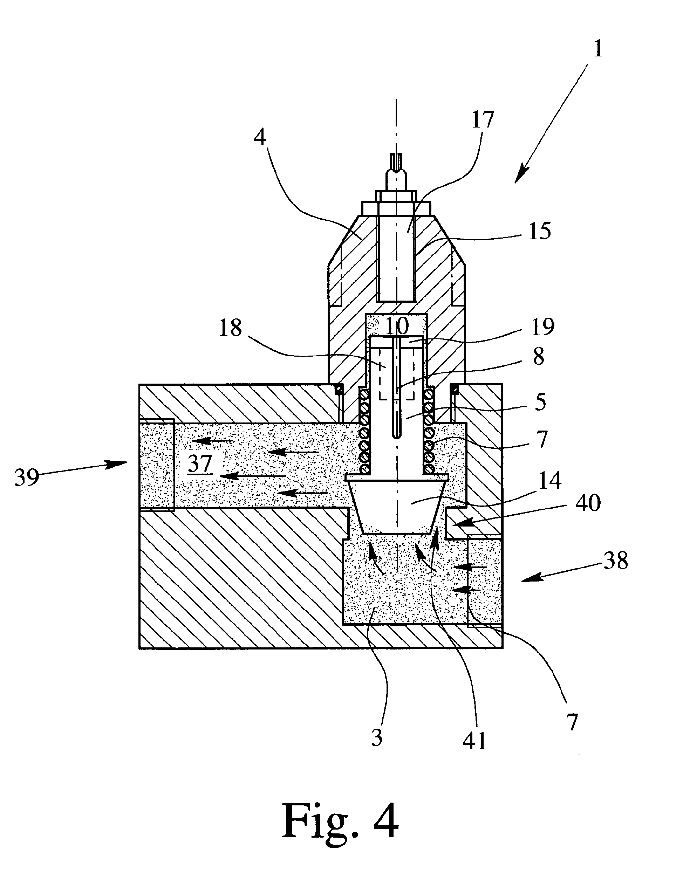

Im Unterschied dazu ist bei dem Ausführungsbeispiel gemäß den Fig. 3 und 4, bei dem der Hubkörper 5 neben dem Bund 11 eine kegelstumpfförmige Spitze 14 aufweist, die Größe des Spaltes 41 näherungsweise proportional zur Strömung 6 des Mediums 3. Bei dem Ausführungsbeispiel gemäß Fig. 5 weist der Abschnitt 40 des Kanals einen konischen Querschnitt auf, so daß aufgrund der kegelstumpfförmigen Spitze 14 des Hubkörpers 5 auch hier der ringförmige Spalt 41 unabhängig von der Strömung 6 des Mediums 3 konstant ist. Dabei ist durch den konischen Querschnitt des Abschnitts 40 und die kegelstumpfförmige Spitze 14 des Hubkörpers 5 eine relativ lange Engstelle für das strömende Medium 3 realisiert, was zu einer hohen Empfindlichkeit des Strömungssensors 1 führt, so daß auch sehr geringe Strömungen 6 noch zuverlässig erfaßt werden können.

Für alle Ausführungsbeispiele gilt, daß dann, wenn keine Strömung 6 vorhanden ist, der Abschnitt 40 durch den Bund 11 von oben verschlossen wird, so daß der oberhalb des Abschnitts 40 angeordnete Bereich des Kanals 37 nicht leer läuft. Der Hubkörper 5 weist somit zusammen mit dem Abschnitt 40 auch die Funktion eines Rückschlagventils auf.

Bei dem Ausführungsbeispiel gemäß den Fig. 1 und 2 kann der Schaltpunkt des Strömungssensors 1 folgendermaßen auf eine vorgegebene Strömungsgeschwindigkeit des Mediums 3 eingestellt werden. Im Ruhezustand des Mediums 3, d.h. ohne Strömung 6, wird der Magnetschalter 17 so weit in das Gehäuse 4 eingeschraubt, bis der Abstand zwischen dem Magnetschalter 17 und dem im Hubkörper 5 angeordneten Permanentmagneten 18 dem Schaltabstand des Magnetschalters 17 entspricht, so daß dieser schaltet. Anschließend wird der Magnetschalter 17 um eine bestimmte Anzahl von Umdrehungen zurückgeschraubt, wodurch der Abstand zwischen dem Magnetschalter 17 und dem Permanentmagneten 18 erhöht wird. Die Weglänge, die der Magnetschalter 17 dabei aus dem Gehäuse 4 rausgeschraubt worden ist, bestimmt den durch die Strömung 6 erforderlichen Hub des Hubkörpers 5, damit es zu einem Schaltsignal des Magnetschalters 17 kommt. Die für den benötigten Hub erforderliche Strömung 6 wird dabei im wesentlichen nur durch die Größe des ringförmigen Spalts 41 zwischen dem zylindrischen Abschnitt 13 des Hubkörpers 5 und dem Abschnitt 40 des Kanals 37 und durch die Federkraft des Federelements 7 bestimmt. Vorzugsweise wird dabei der Schaltpunkt des Magnetschalters 17 so eingestellt, daß der Magnetschalter 17 gerade dann schaltet, wenn sich der untere Rand des zylindrischen Abschnitts 13 in der Mitte des Kanals 40 befindet.

Bei dem Ausführungsbeispiel gemäß den Fig. 3 und 4 kann der Schaltpunkt des Magnetschalters 17 einfach folgendermaßen auf eine bestimmte, vorhandene Strömung 6 eingestellt werden. Der Magnetschalter 17 wird zunächst bei anliegender Strömung 6 so weit in das Gehäuse 4 eingeschraubt, bis der Magnetschalter 17 schaltet. Anschließend wird der Magnetschalter 17 durch die Mutter 16 fixiert; der gewünschte Schaltpunkt des Strömungssensors 1 ist für die gegebene Strömung 6 eingestellt.

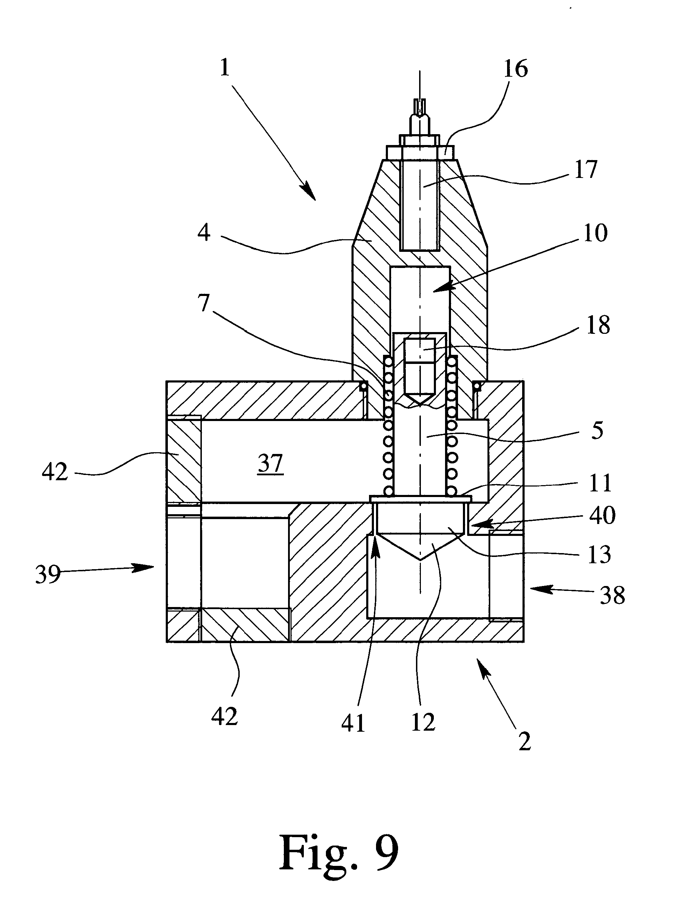

Bei der Baueinheit gemäß der Fig. 9 unterscheidet sich das Anschlußstück 2 dadurch von dem in den Fig. 1 bis 4 dargestellten Anschlußstück 2, daß dort der Einlaß 38 und der Auslaß 39 des Kanals 37 auf derselben Achse liegen. Wie bei den Ausführungsbeispielen gemäß den Fig. 1 bis 4 wird auch bei dem Ausführungsbeispiel gemäß Fig. 9 der Kanal 37 einfach durch eine entsprechende Anzahl von Bohrungen realisiert. Während bei dem Anschlußstück 2 gemäß den Fig. 1 bis 4 hierfiir drei Bohrungen genügen, sind bei dem Anschlußstück 2 gemäß Fig. 9 zwei weitere Bohrungen erforderlich. Da das Anschlußstück 2 mit der Öffnung 36 für den Strömungssensor 1 sowie dem Einlaß 38 und dem Auslaß 39 im Endzustand nur drei Öffnungen aufweisen soll, werden bei dem Anschlußstück 2 gemäß der Fig. 9 die beiden nicht benötigten Öffnungen jeweils mit einem Stopfen 42 druckdicht verschlossen. Selbstverständlich kann so auch eine andere Position von Einlaß 38 oder Auslaß 39 erzielt werden.

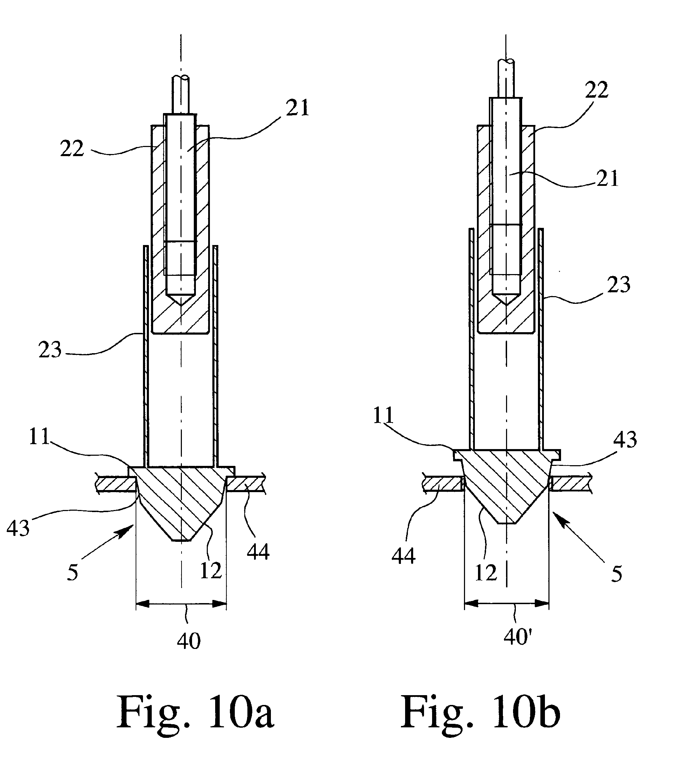

Die Fig. 10 zeigt zwei Darstellungen eines erfindungsgemäßen Strömungssensors 1, wobei hier zur Vereinfachung das Gehäuse 4 weggelassen worden ist. Der Strömungssensor 1 gemäß Fig. 10 unterscheidet sich von den in den übrigen Figuren, beispielsweise in den Fig. 7 und 8 dargestellten Strömungssensoren 1 durch eine spezielle Ausgestaltung des Hubkörpers 5. Der in Fig. 10 dargestellte Hubkörper 5 weist nämlich anstelle eines zylindrischen Abschnitts 13 angrenzend an den umlaufenden Bund 11 einen Abschnitt 43 mit einer geringen Konizität von wenigen Grad auf. Der Neigungswinkel des Abschnitts 43 kann beispielsweise 5° bis 10° betragen, während der Neigungswinkel der konischen Spitze 12 ca. 45° beträgt.

Der Vorteil eines Abschnitts 43 mit geringer Konizität besteht darin, daß dadurch Toleranzen im Durchmesser der Öffnung 40 ausgeglichen werden können, ohne daß es dafür eines anderen Hubkörpers 5 mit einem anderen Durchmesser bedarf. Bei dem in Fig. 10a dargestellten Ausführungsbeispiel entspricht der Durchmesser der Öffnung 40 dem maximalen Durchmesser des Abschnitts 43 mit geringer Konizität, so daß der Hubkörper 5 mit der Unterkante des Bundes 11 auf dem Rand 44 der Öffnung 40 aufliegt. Bei dem in Fig. 10b dargestellten Ausführungsbeispiel ist dagegen der Durchmesser der Öffnung 40' etwas geringer, so daß der Hubkörper 5 weniger weit in die Öffnung 40' eintaucht, als dies bei Fig. 10a der Fall ist.

Idealerweise ist der Abschnitt 43 des Hubkörpers 5 so dimensioniert, daß der mittlere Durchmesser des Abschnitts 43 dem Soll-Durchmesser der Öffnung 40 entspricht. Je nach dem, ob der tatsächliche Durchmesser der Öffnung 40 größer oder kleiner als der Soll-Durchmesser ist, taucht der Hubkörper 5 mit dem Abschnitt 43 dann mehr oder weniger weit in die Öffnung 40 ein. Durch eine entsprechende Wahl der Länge und des Neigungswinkels des Abschnitts 43 kann somit ein Hubkörper 5 zur Verfügung gestellt werden, der bei Öffnungen 40 mit einem bestimmten Durchmesserbereich eingesetzt werden kann. Die Gefahr einer Verklemmung des Hubkörpers 5 in der Öffnung 40 kann dadurch verringert werden, daß das massive Ende 30 des Hubkörpers 5 aus Kunststoff besteht.

Da sich bei der zuvor beschriebenen Variante des Hubkörpers 5 die Lage des Hubkörpers 5 in Abhängigkeit vom Durchmesser der Öffnung 40 verändert, verändert sich dadurch auch der Abstand zwischen dem induktiven Näherungsschalter 21 und dem den induktiven Näherungsschalter 21 beeinflussenden Ende des hülsenförmigen Teils 23 des Hubkörpers 5. Der Ausgangspunkt für eine Strömung "Null" ist somit abhängig vom Durchmesser der Öffnung 40. Daher ist eine Einstellung bzw. Justierung des induktiven Näherungsschalters 21 auf die Grundstellung des Hubkörpers 5, d.h. auf den Strömungsnullpunkt erforderlich. Aus diesem Grund ist der induktive Näherungsschalter 21 ― und vorzugsweise auch der Magnetschalter 17 ― derart in dem Gehäuse 4 angeordnet, daß der Abstand des Magnetschalters 17 bzw. des Näherungsschalters 21 zum Hubkörper 5 einstellbar ist.

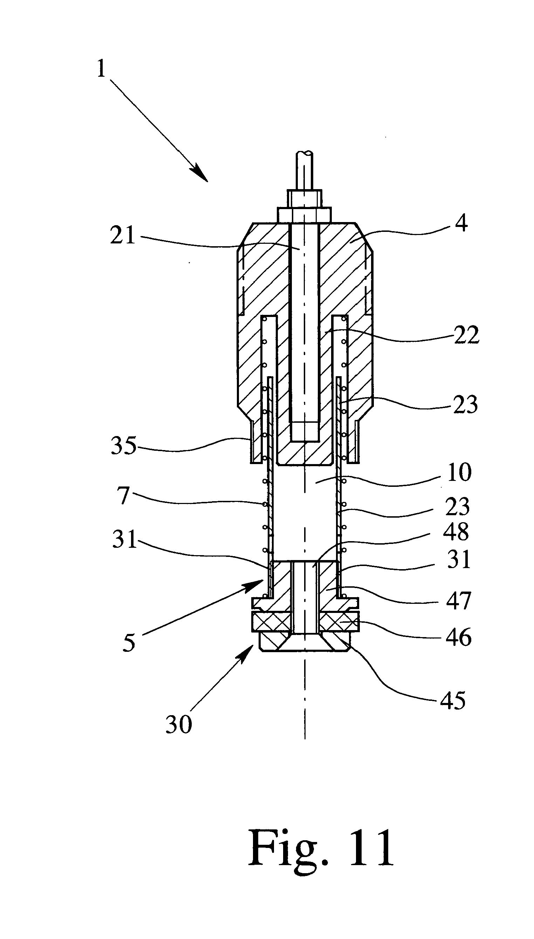

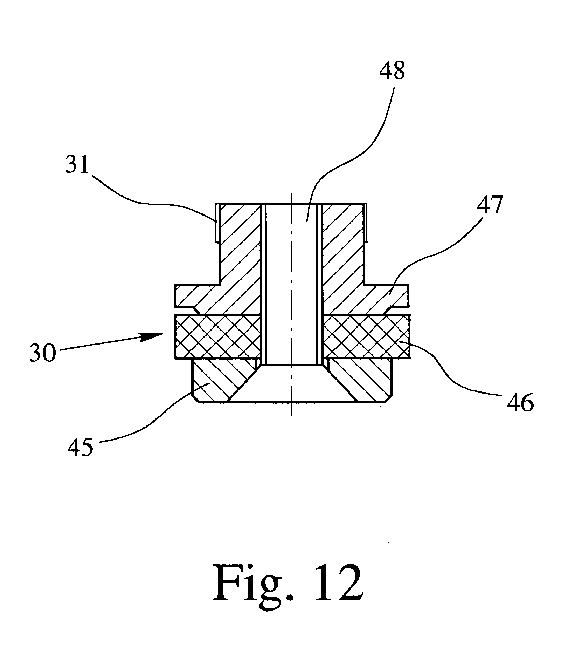

Bei dem in Fig. 11 dargestellten Strömungssensor 1 ist ein besonderer Hubkörper 5 eingesetzt, der gemäß dem Hubkörper 5 aus Fig. 7 zunächst zweiteilig aufgebaut ist, nämlich aus dem hülsenförmigen Ende 23 (Rohr) und dem massiven Ende 30 besteht. Das Ende 30 weist auch hier ein Außengewinde 31 und das hülsenförmige Ende 23 ein korrespondierendes Innengewinde 32 auf, so daß die beiden Teile des Hubkörpers 5 einfach miteinander verschraubt werden können. Darüber hinaus besteht das in Fig. 12 separat dargestellte Ende 30 des Hubkörpers 5 selber aus mehreren Teilen, nämlich einer Scheibe 45, einem Dichtelement 46 und einem Adapter 47. Die Scheibe 45, das Dichtelement 46 und der Adapter 47 weisen jeweils eine Bohrung zur Aufnahme einer Schraube 48 auf, wobei die Bohrung in der Scheibe 45 und im Adapter 47 jeweils ein Innengewinde aufweist, so daß die drei Bauteile mittels der Schraube 48 miteinander zu einer Einheit verbunden werden können. Bei dem in den Fig. 11 und 12 dargestellten Hubkörper 5 übernimmt das Dichtelement 46 die Funktion des ansonsten an dem Hubkörper 5 ausgebildeten Bundes 11.

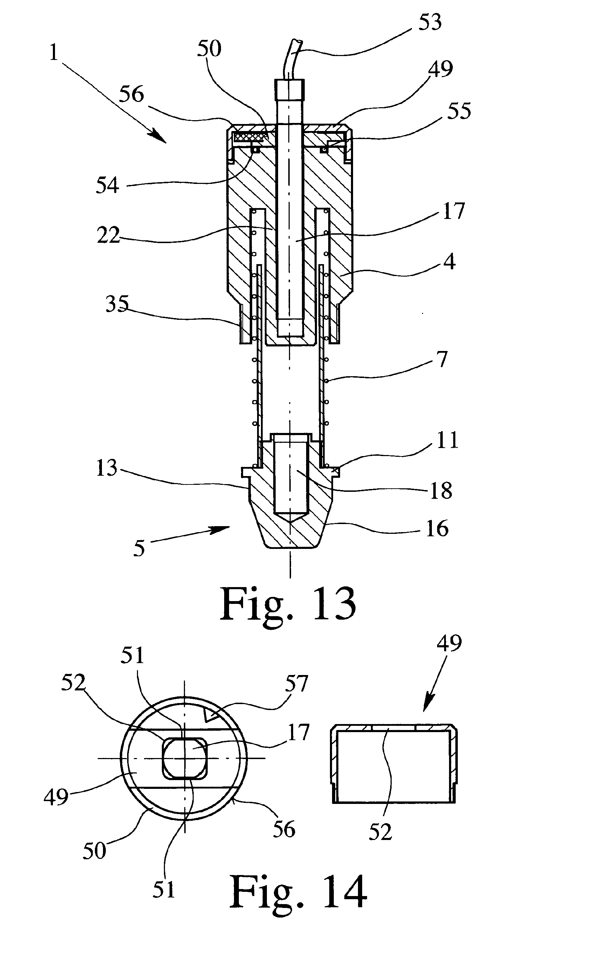

Fig. 13 zeigt einen Strömungssensor 1, welcher dem Strömungssensor 1 gemäß Fig. 8 ähnelt. Auch bei dem Strömungssensor 1, der in Fig. 13 dargestellt ist, ist der Abstand des Magnetschalters 17 zum Hubkörper 5 einstellbar. Dies geschieht hierbei jedoch nicht dadurch, daß der Magnetschalter 17 direkt in den Führungsbolzen 22 des Gehäuses 4 eingeschraubt wird, sondern mit Hilfe eines speziellen Einstellmechanismusses, welcher nachfolgend auch im Zusammenhang mit Fig. 14 beschrieben wird.

Ähnlich dem Deckel 26 gemäß Fig. 6 ist an dem dem Hubkörper 5 abgewandten Ende des Gehäuses 4 ein Befestigungsbügel 49 aufgeschraubt, wobei zwischen dem stirnseitigen Ende des Gehäuses 4 und dem Befestigungsbügel 49 eine Verstellmutter 50 angeordnet ist. Der ein Außengewinde aufweisende Magnetschalter 17 weist zwei einander gegenüberliegende abgeflachte Längsseiten 51 auf, so daß der Magnetschalter 17 einen nicht kreisförmigen Querschnitt hat. In dem Befestigungsbügel 49 ist eine an den Querschnitt des Magnetschalters 17 angepaßte Öffnung 52 ausgebildet, so daß der Magnetschalter 17 nur bei entsprechender Ausrichtung der beiden abgeflachten Längsseiten 51 durch die Öffnung 52 im Befestigungsbügel 49 durchgesteckt werden kann. Die Verstellmutter 50 weist schließlich noch ein zum Außengewinde des Magnetschalters 17 korrespondierendes Innengewinde auf, so daß durch Verdrehen der Verstellmutter 50 die axiale Position des Magnetschalters 17 eingestellt werden kann, d. h. die Eintauchtiefe des Magnetschalters 17 in den Führungsbolzen 22 und damit der Abstand des Magnetschalters 17 zum Hubkörper 5 verändert werden kann.

Der Vorteil dieses aus dem Befestigungsbügel 49, der Verstellmutter 50 und dem mit abgeflachten Längsseiten versehenen Magnetschalters 17 bestehenden Einstellmechanismusses besteht darin, daß beim Verdrehen der Verstellmutter 50 die axiale Position des Magnetschalters 17 verändert wird, ohne daß sich der Magnetschalter 17 selber um seine Längsachse mitdreht. Dieses Verhindern des Mitdrehens des Magnetschalters 17 wird durch das Zusammenwirken der abgeflachten Längsseiten 51 mit der angepaßten Öffnung 52 im Befestigungsbügel 49 erreicht. Das ist insbesondere dann vorteilhaft, wenn der Magnetschalter 17 über ein Anschlußkabel 53 bereits elektrisch angeschlossen ist, da dann ein Verdrehen des Anschlußkabels 53 verhindert wird.

Zur Verhinderung eines ungewollten Verdrehens der Verstellmutter 50 ist in der Stirnseite des Gehäuses 4 eine Nut 54 angeordnet, in die ein O-Ring 55 eingelegt ist, wobei die Verstellmutter 50 durch den Befestigungsbügel 49 leicht gegen den O-Ring 55 gedrückt wird. Der O-Ring 55 wirkt dadurch als "Bremse" für die Verstellmutter 50, ohne jedoch ein gewolltes Verdrehen der Verstellmutter 50 zu behindern. Zur einfachen Betätigung der Verstellmutter 50 kann diese darüber hinaus an ihrem Außenumfang noch eine Rändelung 56 aufweisen.

Durch den zuvor beschriebenen Einstellmechanismus kann somit der Abstand zwischen dem Sensorelement - einem Magnetschalter 17 oder einem induktiven Näherungsschalter 21 - und dem Hubkörper 5 sehr komfortabel und genau eingestellt werden. Die axiale Position des Sensorelements 17, 21 im Gehäuse 4 kann dabei unmittelbar am aus dem Gehäuse 4 herausstehenden Ende des Sensorelements 17, 21 abgelesen werden. Hierzu ist vorzugsweise auf einer abgeflachten Längsseite 51 des Sensorelements 17, 21 eine entsprechende Skalierung aufgebracht. Darüber hinaus kann auch die Verstellmutter 50 eine Markierung in Form einer Einkerbung 57 aufweisen, so daß auch der Verdrehwinkel der Verstellinutter 50 einfach ablesbar ist.

Anhand der in den Ausführungsbeispielen gezeigten unterschiedlichen Varianten des erfindungsgemäßen Strömungssensors 1 ist ersichtlich, daß der Strömungssensor 1 je nach Ausgestaltung für unterschiedliche Anwendungsfälle einsetzbar ist. Eine Anpassung an die unterschiedlichen Anwendungsfälle ist dabei durch die mögliche Modularität und den dadurch bedingten leichten Austausch einzelner Bauteile des Strömungssensors 1 einfach machbar. Insbesondere können die einzelnen Bauteile wie Gehäuse 2 und Hubkörper 6 zweiteilig ausgebildet sein, so daß für die einzelnen Bauteile an die jeweiligen Bedingungen angepaßte Materialen verwendet werden können. Dadurch ist der Strömungssensor 1 bei unterschiedlichen Medien, insbesondere auch bei aggressiven Medien einsetzbar.

In der einfachsten Ausführung wird der Strömungssensor 1 als binärer Strömungswächter eingesetzt, der wahlweise einen Magnetschalter 17 oder einen induktiven Näherungsschalter 21 aufweist. Die Einstellung des Schaltpunktes kann entweder bereits fertigungsseitig vorgegeben sein, oder durch entsprechend weites Einschrauben des Sensorelements 17, 21 in das Gehäuse 4 flexibel erfolgen. Ein derartiger Strömungswächter 1 zeichnet sich durch eine sehr hohe Schaltgenauigkeit und eine sehr geringe Hysterese aus.

Daneben ist der erfindungsgemäße Strömungssensor 1 jedoch auch als sehr präziser Analogsensor, d. h. als Strömungsmeßgerät einsetzbar, wenn das Signal des Magnetschalters 17 in ein analoges Ausgangssignal umgewandelt wird. Hierbei wird ein Hubkörper 5 mit einer konisch oder kegelstumpfförmig zulaufenden Spitze 14 verwendet, wodurch das analoge Ausgangssignal des Magnetschalters 17 im wesentlichen linear proportional zur Strömung des zu überwachenden Mediums 3 ist.

## Patentansprüche

1. Strömungssensor für strömende Medien (3), mit einem Gehäuse (4), mit einem in dem Gehäuse (4) zumindest teilweise angeordneten Sensorelement und mit einem in das strömende Medium (3) hineinragenden Hubkörper (5), wobei der Hubkörper (5) beweglich im Gehäuse (4) geführt ist, in Abhängigkeit von der Strömung (6) des zu überwachenden Mediums (3) gegen die Federkraft eines zwischen dem Gehäuse (4) und dem Hubkörper (5) angeordneten Federelements (7) bewegbar ist und wobei das Sensorelement ein von der Position des Hubkörpers (5) abhängiges Signal erzeugt,
**dadurch gekennzeichnet,**
**daß** in dem Hubkörper (5) mindestens eine Nut (8) oder Bohrung (9) vorgesehen ist, die das strömende Medium (3) mit einem im Inneren des Strömungssensors (1) zwischen dem Gehäuse (4) und dem Hubkörper (5) ausgebildeten, Raum (10) verbindet,
so daß in Abhängigkeit von der Bewegungsrichtung des Hubkörpers (4) durch die Nut (8) oder die Bohrung (9) Medium (3) in den Raum (10) hinein oder aus dem Raum heraus fließen kann.

2. Strömungssensor nach Anspruch 1, **dadurch gekennzeichnet, daß** am Außenumfang des vorzugsweise zylindrischen Hubkörpers (5) mehrere Bohrungen (9) oder mehrere, in Längsrichtung des Hubkörpers (5) verlaufende Nuten (8), jeweils mit vorzugsweise gleichem Abstand zueinander, vorgesehen sind.

3. Strömungssensor nach Anspruch 1, **dadurch gekennzeichnet, daß** am Außenumfang des vorzugsweise zylindrischen Hubkörpers (5) eine spiralförmige Nut (8) vorgesehen ist.

4. Strömungssensor nach einem der Ansprüche 1 bis 3, **dadurch gekennzeichnet, daß** der Hubkörper (5) einen umlaufenden Bund (11) aufweist, wobei der Bund (11) so ausgebildet ist, daß das Strömungssensor (1) zusätzlich die Funktion eines Rückschlagventils aufweist.

5. Strömungssensor nach einem der Ansprüche 1 bis 4, **dadurch gekennzeichnet, daß** das - im eingebauten Zustand - in das strömende Medium (3) hineinragende Ende des Hubkörpers (5) eine konisch zulaufende Spitze (12) aufweist.

6. Strömungssensor nach Anspruch 4 oder 5, **dadurch gekennzeichnet, daß** zwischen der konisch zulaufenden Spitze (12) des Hubkörpers (5) und dem umlaufenden Bund (11) ein zylindrischer Abschnitt (13) am Hubkörper (5) ausgebildet ist.

7. Strömungssensor nach einem der Ansprüche 1 bis 4, **dadurch gekennzeichnet, daß** das ― im eingebauten Zustand ― in das strömende Medium (3) hineinragende Ende des Hubkörpers (5) eine kegelstumpfförmige Spitze (14) aufweist.

8. Strömungssensor nach einem der Ansprüche 1 bis 7, **dadurch gekennzeichnet, daß** der Hubkörper (5) einen Abschnitt (43) mit einer geringen Konizität von 0,5° bis 15° aufweist.

9. Strömungssensor nach einem der Ansprüche 1 bis 8, **dadurch gekennzeichnet, daß** das Sensorelement derart in dem Gehäuse (4) angeordnet, vorzugsweise eingeschraubt ist, daß der Abstand des Sensorelements zum Hubkörper (5) einstellbar ist.

10. Strömungssensor nach Anspruch 9, **dadurch gekennzeichnet, daß** die Position des Sensorelements im Gehäuse (4) fixierbar ist, vorzugsweise mittels einer Mutter (16).

11. Strömungssensor nach Anspruch 10, **dadurch gekennzeichnet, daß** die Position des Sensorelements im Gehäuse (4) unmittelbar am aus dem Gehäuse (4) herausstehenden Ende des Sensorelements und/oder am Gehäuse (4) ablesbar ist.

12. Strömungssensor nach einem der Ansprüche 9 bis 11, **dadurch gekennzeichnet, daß** an dem dem Hubkörper (5) abgewandten Ende des Gehäuses (4) ein Befestigungsbügel (49) angeordnet ist, und daß zwischen dem Ende des Gehäuses (4) und dem Befestigungsbügel (49) eine Verstellmutter (50) angeordnet ist, wobei das Sensorelement (17, 21) ein Außengewinde und mindestens eine abgeflachte Längsseite (51) aufweist, in dem Befestigungsbügel (49) eine an den Querschnitt des Sensorelements (17, 21) angepaßte Öffnung (52) ausgebildet ist und die Verstellmutter (50) ein zum Außengewinde des Sensorelements (17, 21) korrespondierendes Innengewinde aufweist, so daß durch Verdrehen der Verstellmutter (50) die axiale Position des Sensorelements (17, 21) eingestellt werden kann, ohne daß sich das Sensorelement (17, 21) mitdreht.

13. Strömungssensor nach Anspruch 12, **dadurch gekennzeichnet, daß** in der Stirnseite des Gehäuses (4) eine Nut (54) angeordnet ist, in die ein O-Ring (55) gehalten ist, wobei die Verstellmutter (50) durch den Befestigungsbügel (49) leicht gegen den O-Ring (55) gedrückt wird.

14. Strömungssensor nach einem der Ansprüche 1 bis 13, **dadurch gekennzeichnet, daß** das Sensorelement ein Magnetschalter (17), insbesondere eine GMR-Zelle ist, und daß im Hubkörper (5) ein Permanentmagnet (18) angeordnet ist.

15. Strömungssensor nach Anspruch 14, **dadurch gekennzeichnet, daß** der Permanentmagnet (18) in einer im Hubkörper (5) angeordneten Bohrung eingesetzt ist, und daß die Bohrung mit einem Deckel (19) dicht verschlossen ist.

16. Strömungssensor nach Anspruch 14 oder 15, **dadurch gekennzeichnet, daß** im zum Hubkörper (5) weisenden Ende des Gehäuses (4) eine Bohrung (20) ausgebildet ist, und daß zumindest das dem Gehäuse (2) zugewandte Ende des Hubkörpers (5) zylinderförmig ausgebildet ist, so daß der Hubkörper (5) in der Bohrung (20) geführt ist.

17. Strömungssensor nach einem der Ansprüche 1 bis 13, **dadurch gekennzeichnet, daß** das Sensorelement ein induktiver Näherungsschalter (21), insbesondere ein nichtbündig einbaubarer ein induktiver Näherungsschalter (21) ist.

18. Strömungssensor nach Anspruch 17, **dadurch gekennzeichnet, daß** der Sensorkopf des induktiven Näherungsschalter (21) neben einer Spule einen Schalenkern, insbesondere aus Ferrit aufweist, in dem die Spule eingelegt ist.

19. Strömungssensor nach einem der Ansprüche 14 bis 18, **dadurch gekennzeichnet, daß** das Gehäuse (4) einen zum Hubkörper (5) weisenden Führungsbolzen (22) aufweist, und daß zumindest das dem Gehäuse (4) zugewandte Ende (23) des Hubkörpers (5) hülsenförmig ausgebildet ist, so daß der Hubkörper (5) auf dem Führungsbolzen (22) geführt ist.

20. Strömungssensor nach Anspruch 19, **dadurch gekennzeichnet, daß** das Gehäuse (4) und der Führungsbolzen (22) zwei separate Bauteile sind.

21. Strömungssensor nach Anspruch 20, **dadurch gekennzeichnet, daß** das Gehäuse (4) eine umlaufende Schulter (24) und der Führungsbolzen (22) einen korrespondierenden Bund (25) aufweist, und daß der Führungsbolzen (22) **dadurch** in dem Gehäuse (4) befestigbar ist, daß der Bund (25) des Führungsbolzens (22) mittels eines auf das Gehäuse (4) aufschraubbaren Deckels (26) an der Schulter (24) des Gehäuses (4) festlegbar ist.

22. Strömungssensor nach Anspruch 21, **dadurch gekennzeichnet, daß** das Gehäuse (4) und der Deckel (26) aus Metall, insbesondere aus Messing oder aus Edelstahl sind.

23. Strömungssensor nach Anspruch 20, **dadurch gekennzeichnet, daß** der Führungsbolzen (22) an seinem dem Hubkörper (5) abgewandten Ende ein Außengewinde (33) und das Gehäuse (4) ein korrespondierendes Innengwinde (34) aufweist, so daß der Führungsbolzen (22) in das Gehäuse (4) einschraubbar ist.

24. Strömungssensor nach einem der Ansprüche 1 bis 23, **dadurch gekennzeichnet, daß** das Gehäuse (4) ein Außengewinde (35) aufweist, so daß das Gehäuse (4) in eine Wandung bzw. einen Anschlußstutzen eines Rohres, durch welches das Medium (3) strömt, einschraubbar ist.

25. Strömungssensor nach einem der Ansprüche 1 bis 24, **dadurch gekennzeichnet, daß** das Sensorelement, insbesondere der Magnetschalter (17) ein von der Position des Hubkörpers (5) abhängiges analoges Signal abgibt, das in einer nachfolgenden Bearbeitungseinheit, insbesondere einem Mikroprozessor, in ein binäres, analoges oder digitales Ausgangssignal umgewandelt wird.

26. Strömungssensor nach Anspruch 25, **dadurch gekennzeichnet, daß** ein Schwellwertschalter mit einem insbesondere einstellbaren Schwellwert vorgesehen ist, der das analoge Signal des Sensorelements in ein binäres Ausgangssignal umwandelt.

27. Baueinheit aus einem Strömungssensor (1) nach einem der Ansprüche 1 bis 26 und einem Anschlußstück (2), wobei in dem Anschlußstück (2) eine Öffnung (36) zur Aufnahme des Strömungssensors (1) und einen Kanal (37) mit einem Einlaß (38) und einem Auslaß (39) ausgebildet ist, durch den das Medium (3) fließt,
**dadurch gekennzeichnet,**
**daß** der Kanal (37) einen Abschnitt (40) aufweist, in den der Hubkörper (5) des Strömungssensors (1) hineinragt und durch den das Medium (3) im wesentlichen parallel zur Längsachse des Hubkörpers (5) fließt,
so daß in Abhängigkeit von der Strömung (6) des zu überwachenden Mediums (3) der Hubkörper (5) gegen die Federkraft des zwischen dem Gehäuse (4) und dem Hubkörper (5) angeordneten Federelements (7) gedrückt wird.

28. Baueinheit nach Anspruch 27, mit einem Strömungssensor (1), dessen Hubkörper (5) einen umlaufenden Bund (11), eine konisch zulaufende Spitze (12) und einen zwischen der konischen Spitze (12) und dem umlaufenden Bund (11) ausgebildeten zylindrischer Abschnitt (13) aufweist, **dadurch gekennzeichnet, daß** der Durchmesser des Abschnitts (40) des Kanals (37) etwas größer als der Durchmesser des zylindrischen Abschnitts (13) des Hubkörpers (5) und etwas kleiner als der Durchmesser des umlaufenden Bundes (11) des Hubkörpers (5) ist, so daß zwischen dem zylindrischen Abschnitt (13) des Hubkörpers (5) und dem Abschnitt (40) des Kanals (37) ein Spalt (41) vorhanden ist.

29. Baueinheit nach Anspruch 27, mit einem Strömungssensor (1), dessen Hubkörper (5) einen umlaufenden Bund (11) und eine kegelstumpfförmige Spitze (14) aufweist, **dadurch gekennzeichnet, daß** der Durchmesser des Abschnitts (40) des Kanals (37) etwas größer als der mittlere Durchmesser der kegelstumpfförmigen Spitze (14) des Hubkörpers (5) und etwas kleiner als der Durchmesser des umlaufenden Bundes (11) des Hubkörpers (5) ist, so daß zwischen der kegelstumpfförmigen Spitze (14) des Hubkörpers (5) und dem Abschnitt (40) ein Spalt (41) vorhanden ist, dessen Größe von der Position des Hubkörpers (5) abhängig ist.

30. Baueinheit nach Anspruch 27, mit einem Strömungssensor (1), dessen Hubkörper (5) einen umlaufenden Bund (11) und eine kegelstumpfförmige Spitze (14) aufweist, **dadurch gekennzeichnet, daß** der Abschnitts (40) des Kanals (37) einen konischen Querschnitt aufweist, der etwas größer als der Durchmesser der kegelstumpfförmigen Spitze (14) des Hubkörpers (5) und etwas kleiner als der Durchmesser des umlaufenden Bundes (11) des Hubkörpers (5) ist, so daß zwischen der kegelstumpfförmigen Spitze (14) des Hubkörpers (5) und dem Abschnitt (40) ein konstanter Spalt (41) vorhanden ist.

31. Baueinheit nach einem der Ansprüche 27 bis 30, **dadurch gekennzeichnet, daß** die Öffnung (36) in dem Anschlußstück (2) ein Innengewinde und das Gehäuse (4) des Strömungssensors (1) ein korrespondierendes Außengewinde (35) aufweist, so daß der Strömungssensor (1) in das Anschlußstück (2) einschraubbar ist.

32. Baueinheit nach einem der Ansprüche 27 bis 31, **dadurch gekennzeichnet, daß** der Einlaß (38) und der Auslaß (39) des Anschlußstückes jeweils über einen Schlauch mit dem Leitungssystem der Maschine oder des Behälters, durch den das zu überwachende Medium (3) fließt, verbindbar sind.

33. Baueinheit nach einem der Ansprüche 27 bis 32, **dadurch gekennzeichnet, daß** der Strömungssensor (1) so in dem Anschlußstück (2) angeordnet ist, daß der Raum (10) unterhalb des Kanals (37) liegt, so daß sichergestellt ist, daß der Raum (10) mit Medium (3) gefüllt ist.
